# EUROPÄISCHE PATENTSCHRIFT

(11) **EP 3 181 380 B1**
(45) Veröffentlichungstag und Bekanntmachung des Hinweises auf die Patenterteilung: **08.04.2020**
(21) Anmeldenummer: 16188864.9
(22) Anmeldetag: 15.09.2016
(51) Int. Cl.: B60C 19/08

(54) **FAHRZEUGLUFTREIFEN**
PNEUMATIC VEHICLE TYRES
PNEUMATIQUES DE VÉHICULE

(30) Priorität: 14.12.2015 DE 102015225149
(43) Veröffentlichungstag der Anmeldung: 21.06.2017
(73) Patentinhaber: Continental Reifen Deutschland GmbH, 30165 Hannover (DE)
(72) Erfinder: Weber, Christian, 30826 Garbsen (DE); Kendziorra, Norbert, 30827 Garbsen (DE)
(74) Vertreter: Finger, Karsten

(56) Entgegenhaltungen:
- EP-A1- 2 027 991
- EP-A1- 2 848 434
- DE-A1-102011 001 989
- JP-A- 2009 154 608

## Beschreibung

Die Erfindung betrifft einen Fahrzeugluftreifen mit einem Laufstreifen, einem Gürtelverband mit zumindest zwei Gürtellagen und einer diesen zumindest abschnittsweise bedeckenden als Spulbandage gefertigten Gürtelbandage, wobei die Gürtellagen aus in elektrisch leitfähiges Gummimaterial eingebetteten Stahlkorden bestehen und die Gürtelbandage aus in Gummimaterial eingebetteten textilen Festigkeitsträgern besteht sowie entweder in axialer Richtung in Bandagenteile geteilt ist oder mit einer in Umfangsrichtung umlaufenden Lücke aufgebracht ist, wobei im Laufstreifen zumindest ein diesen durchsetzendes sich bis zur Laufstreifenaußenfläche erstreckendes elektrisch leitfähiges Element eingebaut ist, wobei zumindest eine mit dem Gürtelverband und der Felge in Verbindung stehende elektrisch leitfähige Seitenwandpassage vorgesehen ist.

Ein Reifen der eingangs genannten Art ist beispielsweise aus der DE 10 2013 109 972 A1 bekannt. Der Reifen weist eine als Spulbandage ausgeführte zweilagige Gürtelbandage auf, wobei die Bandagenlagen in ihrem axial mittigen Bereich elektrisch leitfähige Bandagenlagenteile aufweisen, welche zwischen einem elektrisch leitfähigen bis zur Außenfläche des Laufstreifens reichenden Carbon-Center-Beam und dem elektrisch leitfähigen Gummimaterial im Gürtelverband verlaufen.

Aus der DE 10 2011 001 989 A1 ist ein Fahrzeugluftreifen bekannt, welcher einen Gürtel mit mehreren Gürtellagen aufweist, die in elektrisch leitfähiges Gummimaterial eingebettete Stahlkorde aufweisen. Der Gürtel ist mit einer Gürtelbandage bedeckt. Ein elektrisch nicht leitfähiger Laufstreifen des Reifens ist in radialer Richtung zweischichtig aus einer Laufstreifenbase und einer Laufstreifencap aufgebaut und weist ferner einen elektrisch leitfähigen Kautschukkeil auf, welcher die Laufstreifenbase und die Laufstreifencap in radialer Richtung durchsetzt.

Die EP 2 027 991 A1 offenbart ein Verfahren zur Herstellung eines Fahrzeugluftreifens, bei welchem ein den Laufstreifen in radialer Richtung durchsetzendes, sich bis zur Laufstreifenaußenfläche erstreckendes elektrisch leitfähiges Element einbaut wird. Dabei wird zunächst ein Teil des Laufstreifens bzw. ein Teil der Laufstreifencap als Profil extrudiert. An der Stirnfläche des Profils wird ein elektrisch leitfähiges Material aufgebracht und im letzten Schritt wird dieses Profil mit einem zweiten extrudierten Profil zum kompletten Laufstreifen bzw. zur kompletten Laufstreifencap zusammengefügt.

Aus der JP 2009 154608 A ist ein Fahrzeugluftreifen bekannt, welcher in seinem Seitenwandbereich zumindest zwei zwischen der Karkasseinlage und der Seitenwand angeordnete elektrisch leitfähige Gummistreifen aufweist. Die elektrisch leitfähigen Gummistreifen verlaufen derart, dass sie jeweils das elektrisch leitfähige Hornprofil sowie ein elektrisch leitfähiges Gürtelkantenpolster kontaktieren.

Es ist bekannt, Reifenbauteile, insbesondere den Laufstreifen und die Seitenwände, aus mit Silica (Kieselsäure) gefüllten Kautschukmischungen zu fertigen um den Rollwiderstand zu reduzieren. Silica enthaltende Kautschukmischungen verleihen den daraus gefertigten Gummibauteilen jedoch einen derart hohen elektrischen Widerstand, dass diese elektrisch nicht mehr leitfähig sind, sodass entsprechende Maßnahmen zur Ableitung der beim Fahren auftretenden elektrostatischen Aufladungen getroffen werden müssen. Die elektrische Leitfähigkeit ist auch bei jenen Reifenbauteilen zu gering, welche aus einer eine sehr geringe Menge an Ruß oder aus einer Ruß mit einer kleinen BET-Oberfläche enthaltenden Kautschukmischung gefertigt sind.

Der Erfindung liegt die Aufgabe zugrunde, bei einem Reifen der eingangs genannten Art zur Reduktion des Rollwiderstandes zumindest einen weiteren Gummimaterial enthaltenden Bauteil aus einer silicagefüllten Kautschukmischung fertigen zu können und dabei auf zweckmäßige Weise die Ableitung elektrostatischer Aufladungen sicherzustellen.

Die gestellte Aufgabe wird erfindungsgemäß dadurch gelöst, dass das Gummimaterial der gesamten Gürtelbandage elektrisch nicht leitfähig ist, wobei ein elektrisch leitfähiges Material zwischen den Bandagenteilen oder der umlaufenden Lücke der Gürtelbandage durchgeführt ist, welches elektrisch leitfähige Material das zumindest eine elektrisch leitfähige Element mit der radial äußersten Gürtellage elektrisch leitend verbindet.

Bei erfindungsgemäßen Fahrzeugluftreifen ist es daher möglich, die gesamte Gürtelbandage aus einer Silica enthaltenden Kautschukmischung zu fertigen, sodass die Gürtelbandage zu einer Verringerung des Rollwiderstandes beiträgt.

Bei einer bevorzugten Ausführungsvariante ist das elektrisch leitfähige Material ein in Umfangsrichtung umlaufender Fortsatz eines als Gummistreifen ausgebildeten Carbon-Center-Beams. Ein solcher Carbon-Center-Beam kann auf einfach Weise aus einer elektrisch leitfähigen Kautschukmischung extrudiert und anschließend auf der Gürtelbandage positioniert werden. Im Zuge der Vulkanisation fließt die Kautschukmischung des Carbon-Center-Beams in den Bereich zwischen die Bandagenteile und tritt mit dem elektrisch leitfähigen Gummimaterial der Gürtellagen in Kontakt.

Bevorzugter Weise weist der Fortsatz in axialer Richtung eine Breite von 3,0 mm bis 7,0 mm auf. Ein Fortsatz dieser Breite kann sich auf besonders zuverlässige Weise während der Vulkanisation ausbilden.

Bei einer bevorzugten Ausführungsvariante weist der Carbon-Center-Beam einen auf der Gürtelbandage verlaufenden sockelartigen Basisteil auf, welcher den Fortsatz im Querschnitt beidseitig überragt. Es ist daher auf besonders zuverlässige Weise sichergestellt, dass ausreichend Kautschukmischung zur Ausbildung des Fortsatzes zur Verfügung steht.

In diesem Zusammenhang ist es auch von Vorteil, wenn der Basisteil in axialer Richtung eine Breite von 10,0 mm bis 20,0 mm aufweist. Ferner ist es von Vorteil, wenn der der Basisteil eine durchschnittliche Dicke von 0,5 mm bis 1,5 mm aufweist.

Bei einer alternativen Ausführungsvariante ist das elektrisch leitfähige Material zumindest ein Gummistreifen. Bevorzugter Weise weist der Gummistreifen eine Dicke von 0,5 mm bis 1,0 mm auf. Ferner weist der Gummistreifen in axialer Richtung vorzugsweise eine Breite von 5,0 mm bis 40,0 mm, insbesondere von 10,0 mm bis 20,0 mm, auf. Derartige Gummistreifen lassen sich auf besonders haltbare Weise mit den angrenzenden ebenfalls aus einer Kautschukmischung gefertigten Reifenbauteilen verbinden und können einfach in den Bereich zwischen die Bandagenteile bzw. in den Bereich der Lücke eingebracht werden.

Bei weiteren bevorzugten Ausführungsvarianten ist das elektrisch leitfähige Material eine aufgesprühte oder aufgestrichene elektrisch leitfähige Paste, Sprühlösung oder Suspension.

Bei noch weiteren bevorzugten Ausführungsvarianten ist das elektrisch leitfähige Material ein elektrisch leitfähiges Pulver oder ein elektrisch leitfähiges Granulat.

Weitere Merkmale, Vorteile und Einzelheiten der Erfindung werden nun anhand der Zeichnung, die schematisch Ausführungsbeispiele der Erfindung darstellt, näher beschrieben. Dabei zeigen

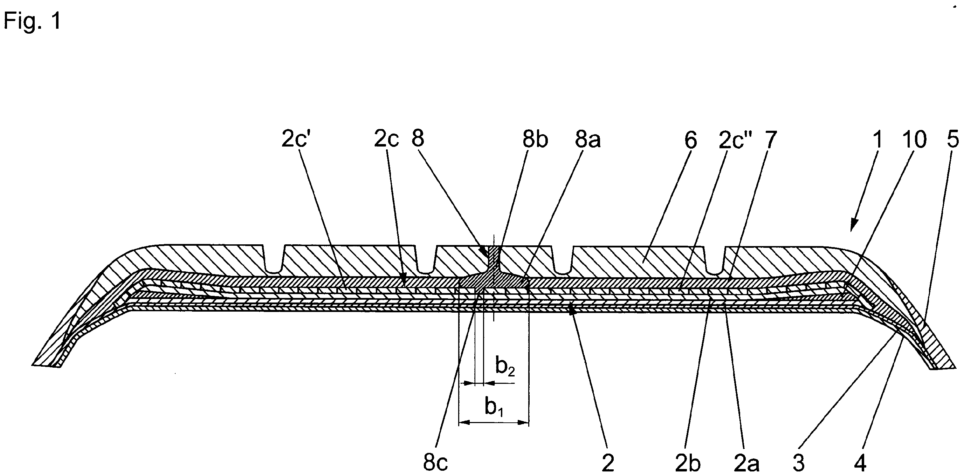

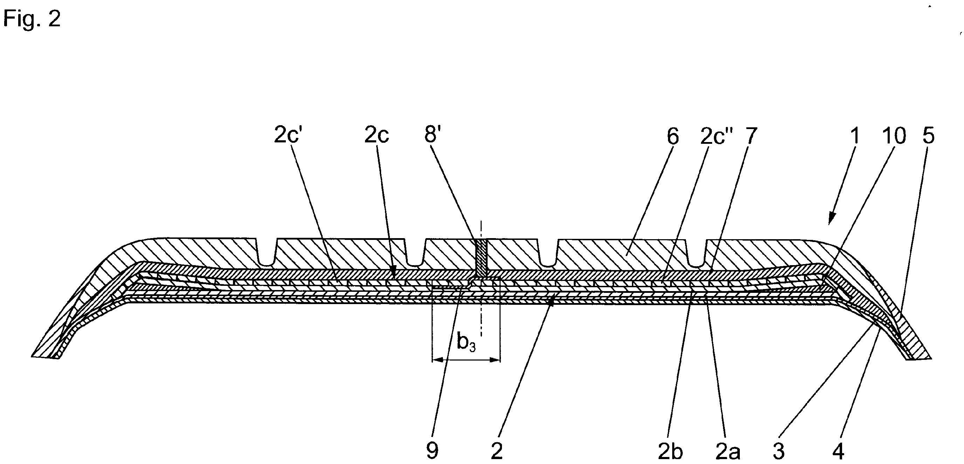

Fig. 1 und Fig. 2 Querschnitte durch einen Fahrzeugluftreifen im Bereich des Gürtelverbandes und des Laufstreifens mit je einer Ausführungsform der Erfindung.

Erfindungsgemäß ausgeführte Fahrzeugluftreifen können Reifen für PKW, Vans, Light-Trucks oder Nutzfahrzeuge sein.

In Fig. 1 und Fig. 2 sind von den wesentlichen Bauteilen eines für einen PKW vorgesehenen Fahrzeugluftreifens in Radialbauart ein Laufstreifen 1, ein zweilagiger Gürtelverband 2, eine Karkasseinlage 3, eine luftdichte Innenschicht 4 und die radial äußeren Bereiche von Seitenwänden 5 dargestellt.

Die Karkasseinlage 3, die Innenschicht 4 und die Seitenwände 5 sowie die nicht gezeigten Wulstbereiche können in an sich bekannter Weise ausgeführt sein, wobei die Gummierung der Karkasseinlage 3 vorzugsweise elektrisch nicht leitfähig ist.

Der Laufstreifen 1 ist bei den gezeigten Ausführungsvarianten in radialer Richtung zweischichtig aufgebaut und setzt sich aus einer die Profilierung enthaltenden Laufstreifencap 6 und einer radial innerhalb der Laufstreifencap 6 verlaufenden Laufstreifenbase 7 zusammen, welche elektrisch nicht leitfähig sind, insbesondere jeweils aus einer einen derartigen Anteil an Silica (fein verteilte Kieselsäure) enthaltenden Kautschukmischung gefertigt sind, dass sie aus einem elektrisch nicht leitfähigen Gummimaterial bestehen. Unter einem elektrisch nicht leitfähigen Gummimaterial wird ein solches verstanden, das einen spezifischen elektrischen Widerstand > 1 x 10⁸ Ohm-cm aufweist. Alternativ kann der Laufstreifen 1 auch als ein elektrisch nicht leitfähiger Monolaufstreifen ausgeführt sein.

Im Laufstreifen 1 ist zumindest ein den Laufstreifen 1 in radialer Richtung durchsetzendes sich bis zur Laufstreifenaußenfläche erstreckendes elektrisch leitfähiges Element vorgesehen. Bei mehreren Elementen sind diese derart über den Reifenumfang verteilt, dass sich beim Abrollen des Reifens zumindest eines der Elemente in der Reifenaufstandsfläche befindet. Beim den gezeigten Ausführungsbeispielen ist jeweils lediglich ein einziges Element, ein elektrisch leitfähiger in Umfangsrichtung umlaufender Carbon-Center-Beam 8, 8' im Laufstreifen 1 eingebaut.

Der Gürtelverband 2 weist zwei Gürtellagen 2a, 2b auf und ist mit einer Gürtelbandage 2c bedeckt. Die beiden Gürtellagen 2a, 2b bestehen aus in elektrisch leitfähigen Gummimaterial eingebetteten Stahlkorden, welche in an sich bekannter Weise gewinkelt und gekreuzt zueinander verlaufen, wobei zumindest eine der Gürtellagen 2a, 2b eine elektrisch leitfähige Seitenwandpassage kontaktiert, die nicht Gegenstand der Erfindung ist. Die elektrisch leitfähige Seitenwandpassage steht mit der metallischen Felge in elektrisch leitfähiger Verbindung. Wie auch in Fig. 1 gezeigt, ist vorzugsweise in jedem der Schulterbereiche ein in an sich bekannter Weise ausgeführter Gürtelkantenpolster 10 vorgesehen.

Die beim gezeigten Ausführungsbeispiel einlagige Gürtelbandage 2c deckt die beiden Gürtellagen 2a, 2b inklusive der Gürtelkanten ab und ist als eine aus zumindest einem Materialstreifen gebildete Spulbandage ausgeführt. Der bzw. die Materialstreifen bestehen aus in elektrisch nicht leitfähiges Gummimaterial eingebetteten, üblicherweise textilen Festigkeitsträgern, vorzugsweise Nylonkorden. Die Festigkeitsträger können ferner auch aus Polyethylenterephthalat, Polyamid oder Aramid gefertigt sein. Die Gürtelbandage 2c ist in axialer Richtung zweiteilig ausgeführt und weist daher zwei Bandagenteile 2c', 2c" auf, wobei die Teilung im Bereich radial innerhalb des Carbon-Center-Beams 8, 8' erfolgt. Alternativ kann die Gürtelbandage 2c mit einer in Umfangsrichtung umlaufenden Lücke aufgebracht sein. Die Gürtelbandage 2c kann auch mehrere, insbesondere zwei, jeweils in axialer Richtung zweiteilig ausgeführte Lagen aufweisen.

Um die Ableitung elektrostatischer Aufladungen von der Felge zur Laufstreifenaußenfläche sicherzustellen, ist durch die Gürtelbandage 2c elektrisch leitfähiges Material durchgeführt, welches eine elektrisch leitfähige Passage zwischen dem Carbon-Center-Beam 8 und dem elektrisch leitfähigen Gürtelverband 2 bildet.

Bei der in Fig. 1 gezeigten Ausführungsvariante wird der Carbon-Center-Beam 8 aus einer elektrisch leitfähigen Kautschukmischung extrudiert und weist in seinem "rohen", nicht vulkanisierten Zustand einen sockelartigen Basisteil 8a und einen Außenteil 8b auf. Der rohe Carbon-Center-Beam 8 wird derart auf der Gürtelbandage 2c positioniert, dass sein sockelartiger Basisteil 8a die zwischen den Bandagenteilen 2c', 2c" vorliegende Lücke im Querschnitt beidseitig überragt. Der Außenteil 8b durchsetzt den Laufstreifen 1 in radialer Richtung bis zur Laufstreifenaußenfläche. Während der Vulkanisation fließt die Kautschukmischung des Basisteiles 8a in die zwischen den Bandagenteile 2c', 2c vorliegenden Lücke, sodass am Basisteil 8a ein aus Gummimaterial bestehender Fortsatz 8c gebildet wird, welcher im fertigen Reifen die radial äußerste Gürtellage 2b kontaktiert und das durch die Gürtelbandage 2c durchgeführte elektrisch leitfähige Material bildet. Im fertigen Reifen weist der sockelartige Basisteil 8a in axialer Richtung eine Breite b₁ von 10,0 mm bis 20,0 mm und in radialer Richtung eine durchschnittliche Dicke von 0,5 mm bis 1,5 mm auf, welche vorzugsweise derart gewählt ist, dass der Basisteil 8a im Wesentlichen vollständig im Bereich der etwaig vorgesehenen Laufstreifenbase 7 eingebaut ist. Der Fortsatz 8c weist im fertigen Reifen eine Breite b₂ von 3,0 mm bis 7,0 mm auf. Der Außenteil 8b weist an der Laufstreifenaußenfläche eine Breite von beispielsweise 2,0 mm auf.

Bei der in Fig. 2 gezeigten Ausführungsvariante ist der Carbon-Center-Beam 8' vorzugsweise ebenfalls ein in Umfangsrichtung umlaufender schmaler Gummistreifen, welcher zwischen den beiden Bandagenteilen 2c', 2c positioniert ist. Radial innerhalb sowie in Kontakt mit dem Carbon-Center-Beam 8' ist ein vorzugsweise in Umfangsrichtung umlaufender Gummistreifen 9 angeordnet, welcher durch zwei benachbarte Windungen der Gürtelbandage 2c durchgeführt ist und derart die radial äußere Gürtellage 2b kontaktiert, wobei die Dicke des Gummistreifens 9 0,5 mm bis 1,0 mm beträgt. In axialer Richtung weist der Gummistreifens 9 eine Breite b₃ von 5,0 mm bis 40,0 mm, insbesondere von 10,0 mm bis 20,0 mm, auf. Alternativ kann auch eine Anzahl von beispielsweise zehn bis fünfzehn über den Reifenumfang verteilten Gummistreifen vorgesehen sein, welche in Umfangsrichtung jeweils eine Erstreckungslänge von 10,0 mm bis 50,0 mm, insbesondere von bis zu 30,0 mm, aufweisen.

Anstelle des Gummistreifens 9 können auch elektrisch leitfähige Fäden, ein elektrisch leitfähiges Gewebe, aufgesprühte oder aufgestrichene elektrisch leitfähige Pasten, Sprühlösungen oder Suspensionen sowie ein elektrisch leitfähiges Pulver oder Granulat verwendet werden, welche beim Spulvorgang der Gürtelbandage entsprechend aufgebracht werden.

Die erwähnten elektrisch leitfähigen Fäden bestehen vorzugsweise aus einem Trägerfaden aus einem elektrisch nicht leitfähigen Material, welcher eine äußere Beschichtung bzw. Ummantelung aus einem elektrisch leitenden Material aufweist. Die Trägerfäden können beispielsweise aus Rayon, Polyester, Polyamid oder Aramid bestehen und ein Monofilament, ein Garn oder ein aus mehreren Garnen bestehender Kord sein. Die elektrisch leitfähige Beschichtung der Fäden kann aus Ruß, Graphitpulver oder Kohlenstoffnanoröhren oder aus einem elastomerhaltigen Material bestehen, welches beispielsweise auf einer Latex oder ein anderes Elastomer enthaltenden Suspension basiert, in welcher elektrisch leitfähige Partikel, etwa Rußpartikel, Graphitpulver oder Kohlenstoffnanoröhren, enthalten sind, die die elektrische Leitfähigkeit der Beschichtung gewährleisten. Zur Herstellung der Beschichtung kann beispielsweise ein Rußpartikel enthaltender herkömmlicher Haftvermittler verwendet werden, der so weit flüssig ist, dass der Trägerfaden durch einen Dip-Vorgang beschichtet werden kann. Verwendet werden kann beispielsweise ein RFL-Dip (Resorzin-Formaldehyd-Latex-Dip), in welchem Rußpartikel, insbesondere N339-Partikel oder N121-Partikel, eingemischt sind. Der Anteil an elektrisch leitfähigen Partikeln in der Suspension beträgt 10 Gew.-% bis 70 Gew.-% und besonders bevorzugt 30 Gew.-% bis 50 Gew.-%. Die elektrisch leitende Beschichtung der Trägerfäden kann auch ausschließlich aus elektrisch leitenden Partikeln, beispielsweise Rußpartikel, Garphitpulver oder Kohlenstoffnanoröhren, bestehen.

Die elektrisch leitfähigen Pasten, Sprühlösungen oder Suspensionen bestehen insbesondere aus einem flüssigen Medium und darin fein verteiltem elektrisch leitfähigen Material. Das flüssige Medium kann vor allem eine üblicherweise in Laufstreifenmischungen verwendet Flüssigkeit sein, wie beispielsweise Rapsöl, MES-Öl, TDAE-Öl, RAE-Öl, paraffinisches Öl oder dergleichen. Es können ferner weitere flüssige oder niedrigschmelzende mit Kautschuk chemisch verträgliche Dispersionsmedien verwendet werden, beispielsweise hochsiedende n-Alkane und iso-Alkane oder Alkene. Auch Weichmacherester mit entsprechenden Schmelz- und Siedepunkten können verwendet werden. Es kann daher das flüssige Dispersionsmedium vom Laufstreifenmaterial nach Applikation der Dispersion absorbiert werden, die an der Oberfläche jeweils verbleibende elektrisch leitfähige Materialschicht bildet die oben erwähnten lokalen elektrisch leitfähigen Passagen. Als fein verteiltes elektrisch leitfähiges Material können beispielsweise eine Kautschukmischung oder Partikel, insbesondere Ruß, beispielsweise Ruß N 339 oder N 121, Graphitpartikel, Kohlenstoffnanoröhren, Carbonfasern oder sonstige elektrisch leitfähige Partikel, beispielsweise auch entsprechende Nanopartikel, eingesetzt werden. Der Anteil an elektrisch leitfähigen Partikeln in der Suspension beträgt beispielsweise 10 Gew.-% bis 70 Gew.-%, insbesondere 30 Gew.-% bis 50 Gew.-%.

### Bezugsziffernliste

- 1: Laufstreifen
- 2: Gürtelverband
- 2a, 2b: Gürtellage
- 2c: Gürtelbandage
- 2c', 2c": Bandagenteile
- 3: Karkasseinlage
- 4: Innenschicht
- 5: Seitenwand
- 6: Laufstreifencap
- 7: Laufstreifenbase
- 8, 8': Carbon-Center-Beam
- 8a: Basisteil
- 8b: Außenteil
- 8c: Fortsatz
- 9: Gummistreifen
- 10: Gürtelkantenpolster

## Patentansprüche

1. Fahrzeugluftreifen mit einem Laufstreifen (1), einem Gürtelverband (2) mit zumindest zwei Gürtellagen (2a, 2b) und einer diesen zumindest abschnittsweise bedeckenden als Spulbandage gefertigten Gürtelbandage (2c), wobei die Gürtellagen (2a, 2b) aus in elektrisch leitfähiges Gummimaterial eingebetteten Stahlkorden bestehen und die Gürtelbandage (2c) aus in Gummimaterial eingebetteten textilen Festigkeitsträgern besteht sowie entweder in axialer Richtung in Bandagenteile (2c', 2c") geteilt ist oder mit einer in Umfangsrichtung umlaufenden Lücke aufgebracht ist, wobei im Laufstreifen (1) zumindest ein diesen durchsetzendes sich bis zur Laufstreifenaußenfläche erstreckendes elektrisch leitfähiges Element (8, 8') eingebaut ist, wobei zumindest eine mit dem Gürtelverband (2) und der Felge in Verbindung stehende elektrisch leitfähige Seitenwandpassage vorgesehen ist,
**dadurch gekennzeichnet,**
**dass** das Gummimaterial der gesamten Gürtelbandage (2c) elektrisch nicht leitfähig ist, wobei ein elektrisch leitfähiges Material (8c, 9) zwischen den Bandagenteilen (2c', 2c") oder in der umlaufenden Lücke der Gürtelbandage (2c) durchgeführt ist, welches elektrisch leitfähige Material das zumindest eine elektrisch leitfähige Element (8, 8') mit der radial äußersten Gürtellage (2b) elektrisch leitend verbindet.

2. Fahrzeugluftreifen nach Anspruch 1, **dadurch gekennzeichnet, dass** das elektrisch leitfähige Element ein als Gummistreifen ausgebildeter Carbon-Center-Beam (8) ist, wobei das elektrisch leitfähige Material (8c) ein in Umfangsrichtung umlaufender Fortsatz (8c) des Carbon-Center-Beams (8) ist.

3. Fahrzeugluftreifen nach Anspruch 2, **dadurch gekennzeichnet, dass** der Fortsatz (8c) in axialer Richtung eine Breite (b₂) von 3,0 mm bis 7,0 mm aufweist.

4. Fahrzeugluftreifen nach einem der Ansprüche 2 oder 3, **dadurch gekennzeichnet, dass** der Carbon-Center-Beam (8) einen auf der Gürtelbandage (2c) verlaufenden sockelartigen Basisteil (8a) aufweist, welcher den Fortsatz (8c) im Querschnitt beidseitig axial überragt.

5. Fahrzeugluftreifen nach Anspruch 4, **dadurch gekennzeichnet, dass** der Basisteil (8a) in axialer Richtung eine Breite (b₁) von 10,0 mm bis 20,0 mm aufweist.

6. Fahrzeugluftreifen nach Anspruch 4 oder 5, **dadurch gekennzeichnet, dass** der Basisteil (8a) eine durchschnittliche Dicke von 0,5 mm bis 1,5 mm aufweist.

7. Fahrzeugluftreifen nach Anspruch 1, **dadurch gekennzeichnet, dass** das elektrisch leitfähige Material zumindest ein Gummistreifen (9) ist.

8. Fahrzeugluftreifen nach Anspruch 7, **dadurch gekennzeichnet, dass** der Gummistreifen (9) eine Dicke von 0,5 mm bis 1,0 mm aufweist.

9. Fahrzeugluftreifen nach Anspruch 7 oder 8, **dadurch gekennzeichnet, dass** der Gummistreifen (9) in axialer Richtung eine Breite (b₃) von 5,0 mm bis 40,0 mm, insbesondere von 10,0 mm bis 20,0 mm, aufweist.

10. Fahrzeugluftreifen nach Anspruch 1, **dadurch gekennzeichnet, dass** das elektrisch leitfähige Material zumindest ein elektrisch leitfähiger Faden oder ein elektrisch leitfähiges Gewebe ist.

11. Fahrzeugluftreifen nach Anspruch 1, **dadurch gekennzeichnet, dass** das elektrisch leitfähige Material eine aufgesprühte oder aufgestrichene elektrisch leitfähige Paste ist.

12. Fahrzeugluftreifen nach Anspruch 1, **dadurch gekennzeichnet, dass** das elektrisch leitfähige Material eine aufgesprühte oder aufgestrichene elektrisch leitfähige Sprühlösung ist.

13. Fahrzeugluftreifen nach Anspruch 1, **dadurch gekennzeichnet, dass** das elektrisch leitfähige Material eine aufgesprühte oder aufgestrichene elektrisch leitfähige Suspension ist.

14. Fahrzeugluftreifen nach Anspruch 1, **dadurch gekennzeichnet, dass** das elektrisch leitfähige Material ein elektrisch leitfähiges Pulver oder ein elektrisch leitfähiges Granulat ist.

## Claims

1. Pneumatic vehicle tyre with a tread (1), a breaker belt assembly (2) comprising at least two belt plies (2a, 2b) and a belt bandage (2c), produced as a wound bandage and covering said assembly, at least in certain portions, wherein the belt plies (2a, 2b) consist of steel cords embedded in electrically conductive rubber material and the belt bandage (2c) consists of textile reinforcing elements embedded in rubber material and is also either divided in the axial direction into bandage parts (2c', 2c") or is applied with a gap running around in the circumferential direction, wherein in the tread (1) there is incorporated at least one electrically conductive element (8, 8') passing through it and extending up to the outer surface of the tread, wherein at least one electrically conductive sidewall passage that is in connection with the breaker belt assembly (2) and the rim is provided,
**characterized**
**in that** the rubber material of the entire belt bandage (2c) is electrically non-conductive, wherein an electrically conductive material (8c, 9) is led through between the bandage parts (2c', 2c") or in the circumferential gap of the belt bandage (2c), which electrically conductive material connects the at least one electrically conductive element (8, 8') to the radially outermost belt ply (2b) in an electrically conducting manner.

2. Pneumatic vehicle tyre according to Claim 1, **characterized in that** the electrically conductive element is a carbon centre beam (8) formed as a rubber strip, wherein the electrically conductive material (8c) is a continuation (8c) of the carbon centre beam (8) that runs around in the circumferential direction.

3. Pneumatic vehicle tyre according to Claim 2, **characterized in that** the continuation (8c) has in the axial direction a width (b₂) of 3.0 mm to 7.0 mm.

4. Pneumatic vehicle tyre according to either of Claims 2 and 3, **characterized in that** the carbon centre beam (8) has a plinth-like base part (8a), which runs on the belt bandage (2c) and in cross section extends axially beyond the continuation (8c) on both sides.

5. Pneumatic vehicle tyre according to Claim 4, **characterized in that** the base part (8a) has in the axial direction a width (b₁) of 10.0 mm to 20.0 mm.

6. Pneumatic vehicle tyre according to Claim 4 or 5, **characterized in that** the base part (8a) has an average thickness of 0.5 mm to 1.5 mm.

7. Pneumatic vehicle tyre according to Claim 1, **characterized in that** the electrically conductive material is at least one rubber strip (9).

8. Pneumatic vehicle tyre according to Claim 7, **characterized in that** the rubber strip (9) has a thickness of 0.5 mm to 1.0 mm.

9. Pneumatic vehicle tyre according to Claim 7 or 8, **characterized in that** the rubber strip (9) has in the axial direction a width (b₃) of 5.0 mm to 40.0 mm, in particular of 10.0 mm to 20.0 mm.

10. Pneumatic vehicle tyre according to Claim 1, **characterized in that** the electrically conductive material is at least one electrically conductive filament or electrically conductive woven fabric.

11. Pneumatic vehicle tyre according to Claim 1, **characterized in that** the electrically conductive material is a sprayed-on or brushed-on electrically conductive paste.

12. Pneumatic vehicle tyre according to Claim 1, **characterized in that** the electrically conductive material is a sprayed-on or brushed-on electrically conductive spray solution.

13. Pneumatic vehicle tyre according to Claim 1, **characterized in that** the electrically conductive material is a sprayed-on or brushed-on electrically conductive suspension.

14. Pneumatic vehicle tyre according to Claim 1, **characterized in that** the electrically conductive material is an electrically conductive powder or an electrically conductive granulate.

## Revendications

1. Pneumatique de véhicule comprenant une bande de roulement (1), une bande de ceinture (2) avec au moins deux couches de ceinture (2a, 2b) et un bandage de ceinture (2c) fabriqué en tant que bandage enroulé, recouvrant celles-ci au moins en partie, les couches de ceinture (2a, 2b) se composant de câbles d'acier noyés dans un matériau caoutchouteux électriquement conducteur et le bandage de ceinture (2c) se composant de renforts textiles noyés dans un matériau caoutchouteux et étant soit divisé dans la direction axiale en parties de bandage (2c', 2c"), soit appliqué avec un espace périphérique dans la direction périphérique, dans la bande de roulement (1) étant intégré au moins un élément électriquement conducteur (8, 8') à travers celle-ci jusqu'à la surface extérieure de la bande de roulement, au moins un passage de paroi latérale électriquement conducteur en liaison avec la bande de ceinture (2) et la jante étant prévu,
**caractérisé en ce que**
le matériau caoutchouteux de l'ensemble du bandage de ceinture (2c) n'étant pas électriquement conducteur, un matériau électriquement conducteur (8c, 9) étant guidé entre les parties de bandage (2c', 2c") ou dans l'espace périphérique du bandage de ceinture (2c), lequel matériau électriquement conducteur relie de manière électriquement conductrice l'au moins un élément électriquement conducteur (8, 8') à la couche de ceinture radialement la plus extérieure (2b).

2. Pneumatique de véhicule selon la revendication 1, **caractérisé en ce que** l'élément électriquement conducteur est une poutre à âme de carbone (Carbon-Center-Beam) (8) réalisée sous forme de bande de caoutchouc, le matériau électriquement conducteur (8c) étant un prolongement (8c) de la poutre à âme de carbone (8) s'étendant sur la périphérie dans la direction périphérique.

3. Pneumatique de véhicule selon la revendication 2, **caractérisé en ce que** le prolongement (8c) présente dans la direction axiale une largeur (b₂) de 3,0 mm à 7,0 mm.

4. Pneumatique de véhicule selon l'une quelconque des revendications 2 ou 3, **caractérisé en ce que** la poutre à âme de carbone (8) présente une partie de base (8a) en forme de socle s'étendant sur le bandage de ceinture (2c), qui dépasse axialement en section transversale des deux côtés du prolongement (8c).

5. Pneumatique de véhicule selon la revendication 4, **caractérisé en ce que** la partie de base (8a) présente, dans la direction axiale, une largeur (b₁) de 10,0 mm à 20,0 mm.

6. Pneumatique de véhicule selon la revendication 4 ou 5, **caractérisé en ce que** la partie de base (8a) présente une épaisseur moyenne de 0,5 mm à 1,5 mm.

7. Pneumatique de véhicule selon la revendication 1, **caractérisé en ce que** le matériau électriquement conducteur est au moins une bande de caoutchouc (9) .

8. Pneumatique de véhicule selon la revendication 7, **caractérisé en ce que** la bande de caoutchouc (9) présente une épaisseur de 0,5 mm à 1,0 mm.

9. Pneumatique de véhicule selon la revendication 7 ou 8, **caractérisé en ce que** la bande de caoutchouc (9) présente, dans la direction axiale, une largeur (b₃) de 5,0 mm à 40,0 mm, en particulier de 10,0 mm à 20,0 mm.

10. Pneumatique de véhicule selon la revendication 1, **caractérisé en ce que** le matériau électriquement conducteur est au moins un fil électriquement conducteur ou un tissu électriquement conducteur.

11. Pneumatique de véhicule selon la revendication 1, **caractérisé en ce que** le matériau électriquement conducteur est une pâte électriquement conductrice pulvérisée ou enduite.

12. Pneumatique de véhicule selon la revendication 1, **caractérisé en ce que** le matériau électriquement conducteur est une solution pulvérisée électriquement conductrice pulvérisée ou enduite.

13. Pneumatique de véhicule selon la revendication 1, **caractérisé en ce que** le matériau électriquement conducteur est une suspension électriquement conductrice pulvérisée ou enduite.

14. Pneumatique de véhicule selon la revendication 1, **caractérisé en ce que** le matériau électriquement conducteur est une poudre électriquement conductrice ou un granulé électriquement conducteur.
